# EUROPÄISCHE PATENTSCHRIFT

(11) **EP 0 682 188 B1**
(45) Veröffentlichungstag und Bekanntmachung des Hinweises auf die Patenterteilung: **12.06.2002**
(21) Anmeldenummer: 95890048.2
(22) Anmeldetag: 07.03.1995
(51) Int. Cl.: F16C 29/02, F16C 25/02, F16C 29/12

(54) **Linearführung**
Linear bearing assembly
Palier linéaire

(30) Priorität: 13.04.1994 AT 76494
(43) Veröffentlichungstag der Anmeldung: 15.11.1995
(73) Patentinhaber: Schaider, Josef, A-3430 Tulln-Staasdorf (AT)
(72) Erfinder: Schaider, Josef, A-3430 Tulln-Staasdorf (AT)
(74) Vertreter: Müllner, Erwin, Dr.

(56) Entgegenhaltungen:
- CH-A- 586 589
- DE-A- 4 104 717
- FR-A- 1 261 540
- US-A- 2 452 804
- US-A- 4 773 769
- US-A- 4 941 758

## Beschreibung

Die vorliegende Erfindung betrifft eine Linearführung mit einer Schiene, und mindestens einem Läufer gemäß dem Oberbegriff der Ansprüche 1 bzw. 2, wie sie aus der US-A-4 941 758 bekannt geworden ist.

Linearführungen sind seit langer Zeit bekannt. Üblicherweise haben die Läufer auf ihrer Oberseite mehrere Gewindebohrungen, sodaß beliebige Elemente (z.B. Paletten) auf ihnen befestigt werden können. Die meisten bekannten Linearführungen haben eine Kugellagerung zwischen dem Läufer und den ebenen Führungsflächen; dies hat zwar den Vorteil eines eher geringen Reibungswiderstandes, aber den Nachteil, daß der von den Kugeln ausgeübte Druck sehr hoch ist und daher für die Schiene und die Läufer sehr hochwertiges Material gewählt werden muß, was die gesamte Anlage entsprechend verteuert.

In der DE-A-34 29 480 ist eine derartige Linearführung mit Kugellagern beschrieben; damit die Läufer (aber nicht die Schiene) aus leichtem und billigem Material hergestellt werden können, sind in Laufbahnaufnahmenuten der Läufer Lagerlaufbahnen aus gehärtetem Material eingesetzt.

Eine Linearführung ist auch aus der US-A-4,773,769 bekannt. Es ist dort eine Schiene mit vier Führungsflächen gezeigt, zwischen dem Läufer und der Schiene sind insgesamt vier Gleitstreifen und zwei Nuter vorgesehen. Die Gleitstreifen weisen jeweils zwei ebene Oberflächen auf, mit denen sie einerseits an entsprechenden ebenen Auflageflächen der Innenseite des Läufers anliegen und andererseits an den ebenen Führungsflächen der Schiene.

Es ist Aufgabe der vorliegenden Erfindung, Linearführungen der eingangs genannten Art zu schaffen, die aus preisgünstigem Material herstellbar sind und bei der das Spiel zwischen dem Läufer und der Schiene auf einfache Weise einstellbar ist.

Diese Aufgabe wird bei einer Linearführung der ersten bzw. zweiten eingangs genannten Art erfindungsgemäß durch die jeweiligen Merkmale in kennzeichnenden Teil gelöst.

Es wird also eine Gleitlagerung und keine Kugellagerung zwischen dem Läufer und der Schiene verwendet. Da die Gleitstreifen eine teilzylindrische Oberfläche aufweisen, mit der sie in entsprechenden teilzylindrischen Rillen liegen, können sie sich um die Zylinderachse verdrehen, sodaß sie mit ihrer ebenen Oberfläche immer exakt an der entsprechenden Auflagefläche des Läufers anliegen können. Entsprechende Toleranzen bei der Fertigung werden auf diese Weise automatisch ausgeglichen, ohne daß ein elastischer Teil notwendig wäre. Vorzugsweise sind die teilzylindrischen Oberflächen halbzylindrisch.

Da weiters erfindungsgemäß zumindest zwischen zwei Gleitstreifen eine Nut vorgesehen ist, die in einer ebene liegt, die parallel zu den Gleitstreifen verläuft und deren Breite z.B. durch Schrauben einstellbar ist, kann das Spiel zwischen dem Läufer und der Schiene auf einfache Weise durch Veränderung der Breite der Nut eingestellt werden. Dadurch ist trotz geringer Reibung die seitliche Beweglichkeit (das Spiel) auch bei großen Belastungen gering.

Eine besonders stabile Führung ergibt sich, wenn die Schiene vier Führungsflächen aufweist, von denen jeweils zwei übereinanderliegen, und wenn der Läufer vier Gleitstreifen aufweist, von denen ebenfalls jeweils zwei übereinanderliegen. Auf diese Weise wird ein Kippen des Läufers um die Achse der Schiene weitestgehend vermieden, weil zu beiden Seiten der Schienenachse jeweils zwei übereinanderliegende Führungsflächen, jeweils eine für aufwärts und eine für abwärts gerichtete Kräfte, vorhanden ist.

Es ist bei dieser Ausführung an sich ausreichend, wenn nur zwischen zwei übereinanderliegenden Gleitstreifen eine Nut zur Einstellung des Spiels vorgesehen ist, weil durch Nachstellung des Spiels auf einer Seite des Läufers dieser automatisch seitlich auf der Schiene verrutscht, sodaß sich das Spiel auch auf der anderen Seite ändert. Zur Erzielung eines möglichst großen Einstellbereiches ist es aber bevorzugt, daß der Läufer zwei Nuten aufweist, jeweils eine zwischen den übereinanderliegenden Gleitstreifen.

Damit die übereinanderliegenden Gleitstreifen einen möglichst geringen Abstand voneinander haben können (was eine entsprechend niedrigere Bauhöhe der Schiene ermöglicht), ist nach einem weiteren Merkmal der Erfindung vorgesehen, daß die Nut bzw. die Nuten von der Außenseite des Läufers ausgehen und vor den Gleitstreifen enden.

Da in diesem Falle das Spiel zwischen Läufer und Schiene geringer wird, wenn die Breite der Nut erhöht wird, kann man bei dieser Ausführungsform die Einstellbarkeit des Spiels in einfachster Form dadurch realisieren, daß normal zur Nut bzw. den Nuten und diese schneidend jeweils eine Gewindebohrung vorgesehen ist, in der zu beiden Seiten der Nut jeweils eine oder mehrere Schrauben vorgesehen sind. Durch Verdrehen der Schrauben gegeneinander drücken diese die Nut auf, erhöhen also deren Breite, wodurch das Spiel zwischen Läufer und Schiene geringer wird.

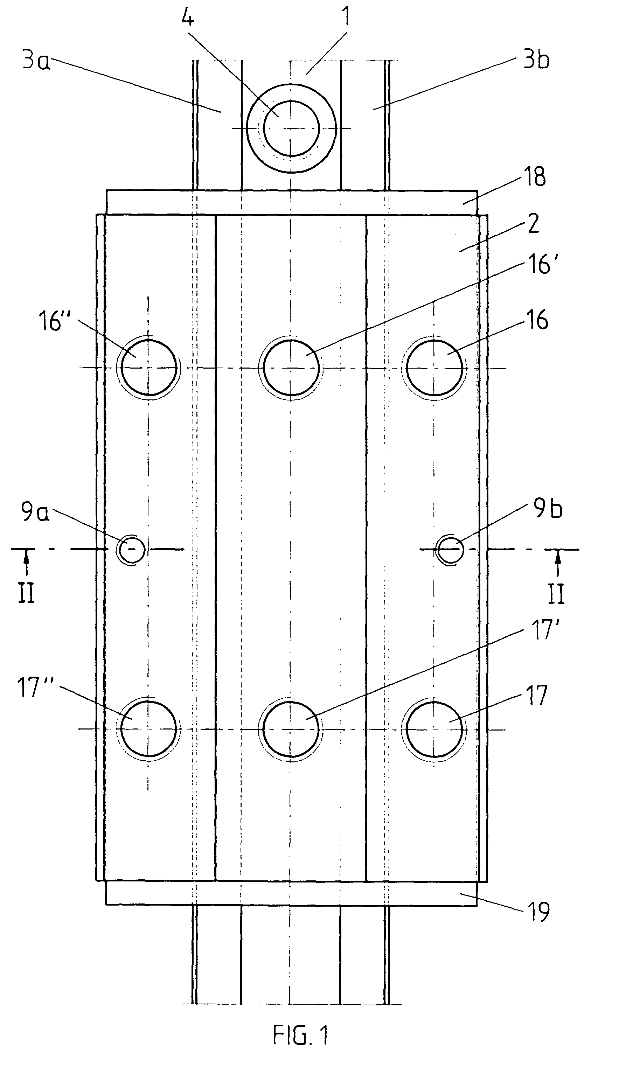

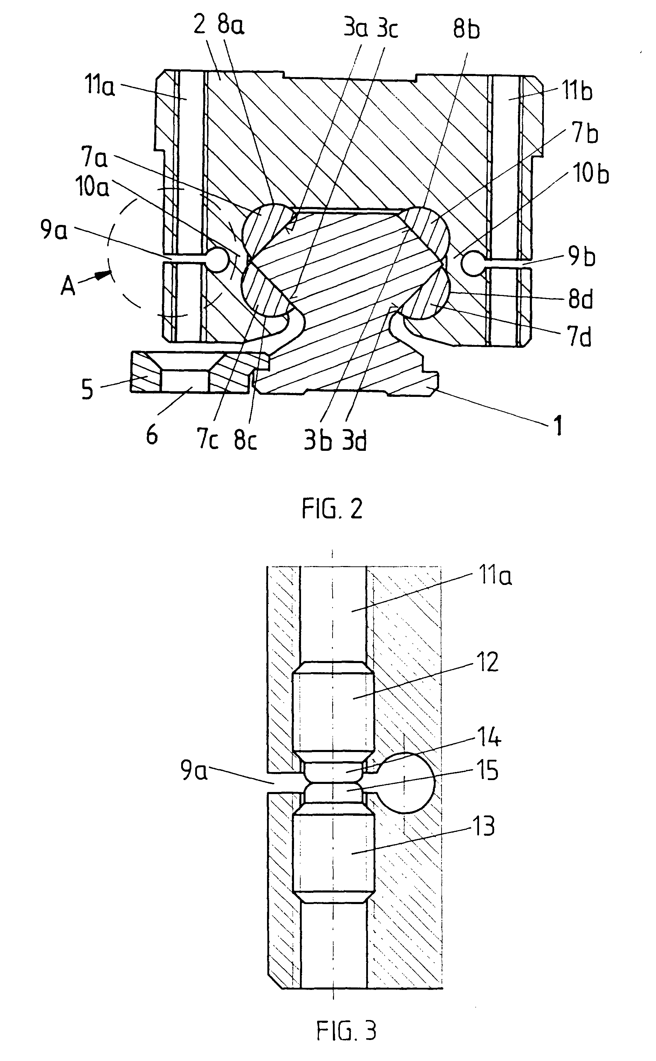

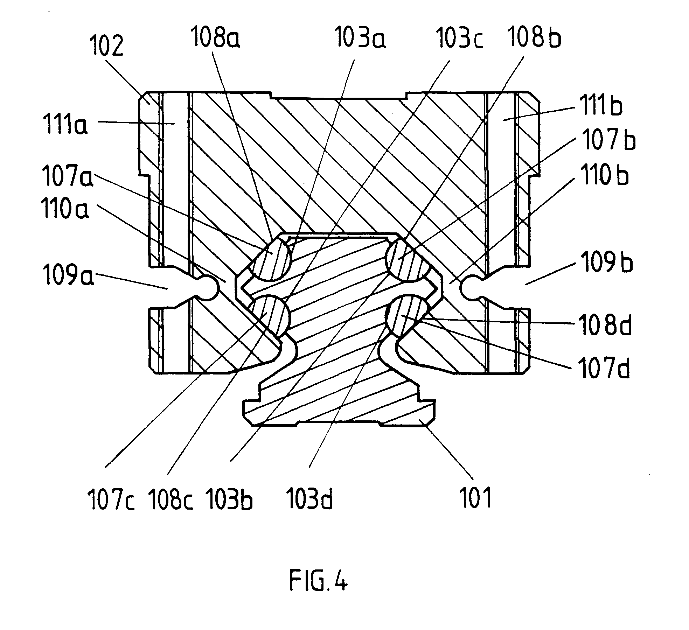

Anhand der beiliegenden Zeichnungen wird die vorliegende Erfindung näher erläutert. Es zeigt: Fig. 1 eine Schiene mit einem Läufer in Draufsicht; Fig. 2 einen Schnitt entlang der Linie II-II in Fig. 1; Fig. 3 das Detail A von Fig. 2; und Fig. 4 einen Schnitt einer anderen Ausführungsform der Erfindung analog zu Fig. 2.

Auf einer Schiene 1 sind ein oder mehrere Läufer 2 vorgesehen. Die Schiene 1 ist auf geeignete Weise am Untergrund befestigt. Zu diesem Zweck können Befestigungslöcher 4 vorgesehen sein, sodaß sie am Untergrund angeschraubt werden kann. Alternativ dazu ist es auch möglich, sie mittels Befestigungselementen 5 am Untergrund festzuklemmen, wobei die Befestigungselemente 5 wiederum mit Schrauben, die durch Befestigungslöcher 6 gehen, fixiert werden können. Die Schiene 1 weist vier Führungsflächen 3a bis 3d auf, wobei jeweils zwei Führungsflächen, nämlich 3a und 3c bzw. 3b und 3d, übereinanderliegen.

An den Führungsflächen 3a bis 3d liegen Gleitstreifen 7a bis 7d an. Da die Führungsflächen 3a bis 3d eben ausgebildet sind, sind die entsprechenden Oberflächen der Gleitstreifen 3a bis 7d ebenfalls eben ausgebildet. Außer dieser ebenen Oberfläche weist jeder Gleitstreifen 7a bis 7d auch eine halbzylindrische Oberfläche auf, mit der er in einer entsprechenden teilzylindrischen Rille 8a bis 8d anliegen. Durch die teilzylindrische Ausbildung der Rillen 8a bis 8d bzw. der entsprechenden Oberflächen der Gleitstreifen 7a bis 7d können sich die Gleitstreifen 7a bis 7d um die Zylinderachse drehen, sodaß der Winkel, den die ebenen Oberflächen der Gleitstreifen 7a bis 7d gegenüber der Horizontalen einschließen, sich automatisch an den entsprechenden Winkel der Führungsflächen 3a bis 3d der Schiene 1 angleicht.

Zwischen den Gleitstreifen 7a und 7c ist eine Nut 9a vorgesehen, und zwischen den Gleitstreifen 7b und 7d ist eine analoge Nut 9b vorgesehen. Die Nuten 9a und 9b verlaufen parallel zu dem Gleitstreifen 7a bis 7d. Vergrößert man die Breite der Nut 9a (bzw. der Nut 9b), so biegt man die Rillen 8a und 8c (bzw. die Rillen 8b und 8d) um das Material 10a (bzw. 10b), das zwischen der Nut 9a und den Gleitstreifen 7a und 7c (bzw. zwischen der Nut 9b und den Gleitstreifen 7b und 7d) verbleibt, aufeinander zu, sodaß ein etwa vorhandenes Spiel auf diese Weise ausgeglichen werden kann. Da sich - wie oben erklärt - die Gleitstreifen 7a bis 7d in den Rillen 8a bis 8d verdrehen können, passen sie sich auch während des Einstellens des Spiels an die Führungsflächen 3a bis 3d an, sodaß auch durch das Einstellen des Spiels kein Winkelfehler zwischen den Führungsflächen 3a bis 3d und den Gleitstreifen 7a bis 7d entstehen kann.

Anhand Fig. 3 wird nun erklärt, wie die Breite der Nut 9a verändert werden kann. Normal zur Nut 9a ist eine Gewindebohrung 11a vorgesehen, wobei diese Gewindebohrung 11a die Nut 9a schneidet. In der Gewindebohrung 11a ist im Abschnitt oberhalb der Nut 9a eine Wurmschraube 12 und im Abschnitt unterhalb der Nut 9a eine Wurmschraube 13 vorgesehen. Beide Wurmschrauben 12, 13 weisen ein verjüngtes Ende 14, 15 auf, mit dem sie aneinander anliegen. Dreht man nun eine der beiden Wurmschrauben 12, 13 weiter in die Gewindebohrung 11a hinein, so wird die Nut 9a aufgespreizt, ihre Breite also erhöht. Analog dazu ist für die Nut 9b eine Gewindebohrung 11b (siehe Fig. 2) vorgesehen, sodaß auch die Breite dieser Nut9b analog eingestellt werden kann.

Anhand der Fig. 4 wird ein weiteres Ausführungsbeispiel der vorliegenden Erfindung erläutert. Ebenso wie bei dem Ausführungsbeispiel gemäß den Fig. 1 bis 3 ist auch hier eine Schiene 101 vorgesehen, auf der ein Läufer 102 verschiebbar angeordnet ist. Zu diesem Zweck sind zwischen der Schiene 101 und dem Läufer 102 vier Gleitstreifen 107a bis 107d vorgesehen. Im Gegensatz zu der Ausführung gemäß Fig. 1 bis 3 sind allerdings hier die Führungsflächen 103a bis 103d der Schiene 101 als teilzylindrische Rillen ausgebildet; die Gleitstreifen 107a bis 107d liegen mit einer teilzylindrischen Oberfläche in diesen Rillen. Mit ihrer ebenen Oberfläche liegen sie an entsprechenden ebenen Auflageflächen 108a bis 108d der Innenseite des Läufers 102 an.

Die Funktion dieser Ausführungsform entspricht genau der Funktion der Ausführungsform gemäß den Fig. 1 bis 3. Insbesondere kann die Einstellung des Spieles analog erfolgen. Es sind deshalb auch hier zwei Nuten 109a, 109b vorgesehen, die parallel zu den Gleitstreifen 107a bis 107d verlaufen und unmittelbar vor diesen enden. Normal zu den Nuten 109a, 109b ist jeweils eine Gewindebohrung 111a, 111b vorgesehen; durch Eindrehen von Schrauben in diese Gewindebohrungen 111a, 111b kann - wie dies anhand von Fig. 3 erläutert wurde - die Breite der Nuten 109a, 109b verändert werden, sodaß die Gleitstreifen 107a und 107c bzw. 107b und 107d um das verbleibende Material 110a bzw. 110b eine Schwenkbewegung aufeinander zu ausführen.

Da zwischen dem Läufer 2 und der Schiene 1 keine Kugellagerung,sondern eine Gleitlagerung vorgesehen ist, ist der auftretende Druck wesentlich geringer. Es ist daher möglich, sowohl die Schiene 1 als auch den Läufer 2 aus Aluminium durch Extrusion herzustellen. In der Schiene 1 müssen nach der Extrusion nur noch die Befestigungslöcher 4 gebohrt werden, und im Läufer 2 müssen nur die Gewindebohrungen 11a, 11b hergestellt werden. Weiters ist es zweckmäßig, Gewindebohrungen 16, 16', 16" und 17, 17', 17" (siehe Fig. 1) herzustellen, damit auf den Läufern entsprechende Aufbauten befestigt werden können. Insgesamt sind also nach der Extrusion nur sehr einfache, billig durchzuführende Bearbeitungsvorgänge (Bohren und Gewindeschneiden) erforderlich, sodaß die erfindungsgemäße Linearführung sehr einfach und billig hergestellt werden kann. Zur Vermeidung von Korrosion ist es zweckmäßig, den Läufer 2 zur eloxieren. Die Schiene 1 sollte an der Oberfläche gehärtet werden; ein derartiges Verfahren wird unter der Bezeichnung Hart-Coat von der Firma AHC-Oberflächentechnik Friebe & Reininghaus GmbH in Kerpen, Deutschland angeboten. Es handelt sich dabei um eine hartanodische Oxidation, die Aluminium vor Verschleiß und Korrosion mit einer harten, keramikähnlichen Schicht schützt. Als Material für die Gleitstreifen 7a bis 7d kommt z.B. ultrahochmolekulares Niederdruck-Polyethylen in Frage. Ein derartiges Material wird unter dem Namen Robalon von Leripa Leder- und Riemen-Patentverwertungsges.m.b.H. in Rohrbach, Österreich angeboten. Bei Verwendung dieser Materialien kostet die Herstellung einer Linearführungerheblich weniger als herkömmliche Linearführungen mit Kugellagerung. Besonders günstig wirkt sich aus, daß die Schiene 1 nicht geschliffen werden muß. Die Gleitstreifen 7a bis 7d können natürlich in üblicher Weise mit einem Trockenschmiermittel (z.B. Molybdändisulfid) versetzt sein.

Die vorliegende Erfindung ist natürlich nicht auf das gezeigte Ausführungsbeispiel beschränkt. So ist es insbesondere möglich, daß der Boden der Rillen 8a bis 8d im Querschnitt etwas mehr als ein Halbkreis ist; die Gleitstreifen 7a bis 7d entsprechen dann auch etwas mehr als einem Halbzylinder, wodurch die Gleitstreifen 7a bis 7d in den Rillen 8a bis 8d auch dann fixiert sind, wenn der Läufer 2 nicht auf der Schiene 1 aufgeschoben ist. (Im gezeigten Ausführungsbeispiel würden die oberen Gleitstreifen 7a und 7b in diesem Falle herunterfallen.) Wenn der Läufer 2 durch Extrusion hergestellt ist, gehen die Rillen 8a bis 8d natürlich durch die gesamte Läuferlänge durch. In diesem Falle müssen die Gleitstreifen 7a bis 7d gegen Längsverschiebung durch entsprechende Kopfteile 18, 19, die an den Stirnflächen des Läufers 2 angebracht sind, geschützt werden.

## Patentansprüche

1. Linearführung mit einer Schiene (1), die mindestens drei Führungsflächen (3a-3d) aufweist, und mit mindestens einem Läufer (2), wobei zwischen den Führungsflächen (3a-3d) und dem Läufer (2) jeweils zumindest ein Gleitstreifen (7a-7d) vorgesehen ist, der eine ebene Oberfläche aufweist, wobei die Gleitstreifen (7a-7d) mit den ebenen Oberflächen an den ebenen Führungsflächen (3a-3d) anliegen und der Läufer (2) mindestens eine Nut (9a, 9b) aufweist, wobei die Breite der Nut (9a, 9b) einstellbar ist, **dadurch gekennzeichnet, daß** die Gleitstreifen (7a-7d) zusätzlich auch jeweils eine teilzylindrische Oberfläche aufweisen, mit der sie an entsprechenden teilzylindrischen Rillen (8a-8d) der Innenseite des Läufers (2) anliegen und daß die Nut (9a,9b) in einer Ebene liegt, die zwischen zwei Gleitstreifen (7a und 7c bzw. 7b und 7d) parallel zu den Gleitstreifen (7a-7d) verläuft.

2. Linearführung mit einer Schiene (101), die mindestens drei Führungsflächen (103a-103d) aufweist, und mit mindestens einem Läufer (102), wobei zwischen den Führungsflächen (103a-103d) und dem Läufer (102) jeweils mindestens ein Gleitstreifen (107a-107d) vorgesehen ist, der eine ebene Oberfläche aufweist, wobei die Gleitstreifen (107a-107d) mit den ebenen Oberflächen an entsprechenden ebenen Auflageflächen (108a-108d) der Ihnenseite des Läufers (102) anliegen und der Läufer (102) mindestens eine Nut (109a, 109b) aufweist, wobei die Breite der Nut (109a, 109b), einstellbar ist, **dadurch gekennzeichnet, daß** die Gleitstreifen (107a-107d) zusätzlich auch jeweils eine teilzylindrische Oberfläche aufweisen, mit der sie an den Führungsflächen (103a-103d), die als teilzylindrische Rillen ausgebildet sind, anliegen, und daß die Nut (109a,109b) in einer Ebene liegt, die zwischen zwei Gleitstreifen (107a und 107c bzw. 107b und 107d) parallel zu den Gleitstreifen (107a-107d) verläuft.

3. Linearführung nach Anspruch 1 oder 2, **dadurch gekennzeichnet, daß** die teilzylindrischen Oberflächen halbzylindrisch sind.

4. Linearführung nach einem der Ansprüche 1 bis 3, **dadurch gekennzeichnet, daß** die Breite der Nut(en) durch Schrauben (12, 13) einstellbar ist.

5. Linearführung nach einem der Ansprüche 1 bis 4, **dadurch gekennzeichnet, daß** die Schiene (1; 101) vier Führungsflächen (3a-3d; 103a-103d) aufweist, von denen jeweils zwei (3a und 3c bzw. 3b und 3d; 103a und 103c bzw. 103b und 103d) übereinanderliegen, und daß der Läufer (2; 102) vier Gleitstreifen (7a-7d; 107a-107d) aufweist, von denen ebenfalls jeweils zwei (7a und 7c bzw. 7b und 7d; 107a und 107c bzw. 107b und 107d) übereinanderliegen.

6. Linearführung nach Anspruch 5, **dadurch gekennzeichnet, daß** der Läufer (2; 102) zwei Nuten (9a-9b; 109a-109b) aufweist, jeweils eine zwischen den übereinanderliegenden Gleitstreifen (7a und 7c bzw. 7b und 7d; 107a und 107c bzw. 107b und 107d).

7. Linearführung nach einem der Ansprüche 1 bis 6, **dadurch gekennzeichnet, daß** die Nut bzw. die Nuten (9a, 9b; 109a, 109b) von der Außenseite des Läufers (2; 102) ausgehen und vor den Gleitstreifen (7a und 7c bzw. 7b und 7d; 107a und 107c bzw. 107b und 107d) enden.

8. Linearführung nach Anspruch 7, **dadurch gekennzeichnet, daß** normal zur Nut bzw. den Nuten (9a, 9b; 109a, 109b) und diese schneidend jeweils eine Gewindebohrung (11a, 11b; 111a, 111b) vorgesehen ist, in der zu beiden Seiten der Nut (9a, 9b; 109a, 109b) jeweils eine oder mehrere Schrauben (12, 13) vorgesehen sind.

## Claims

1. Linear guide with a rail (1), which has at least three guide surfaces (3a-3d), and having at least one runner (2), wherein between the guide surfaces (3a-3d) and the runner (2) there is in each case provided at least one glide strip (7a-7d) which has an even surface, wherein the glide strips (7a-7d) with the even surfaces rest against the even guide surfaces (3a-3d) and the runner (2) has at least one groove (9a, 9b), wherein the width of the groove (9a, 9b) is adjustable, **characterised in that** the glide strips (7a-7d) additionally in each case also have a partial cylindrical surface with which they rest against corresponding partial cylindrical grooves (8a-8d) on the inside of the runner (2) and that the groove (9a, 9b) lies in a plane which runs between two glide strips (7a and 7c or 7b and 7d) parallel to the glide strips (7a-7d).

2. Linear guide with a rail (101), which has at least three guide surfaces (103a-103d), and having at least one runner (102), wherein between the guide surfaces (103a-103d) and the runner (102) there is in each case provided at least one glide strip (107a-107d) which has an even surface, wherein the glide strips (107a-107d) with the even surfaces rest against corresponding even support surfaces (108a-108d) on the inside of the runner (102) and the runner (102) has at least one groove (109a,109b), wherein the width of the groove (109a, 109b) is adjustable, **characterised in that** the glide strips (107a-107d) additionally in each case also have a partial cylindrical surface with which they rest against the guide surfaces (103a-103d) which are constructed as partial cylindrical grooves, and that the groove (109a, 109b) lies in a plane which runs between two glide strips (107a and 107c or 107b and 107d) parallel to the glide strips (107a-107d).

3. Linear guide according to claim 1 or 2, **characterised in that** the partial cylindrical surfaces are semicylindrical.

4. Linear guide according to one of the claims 1 to 3, **characterised in that** the width of the groove(s) is adjustable by screws (12, 13).

5. Linear guide according to one of the claims 1 to 4, **characterised in that** the rail (1; 101) has four guide surfaces (3a-3d; 103a-103d) of which in each case two (3a and 3c or 3b and 3d; 103a and 103c or 103b and 103d) are arranged one on top of each other, and that the runner (2; 102) has four glide strips (7a-7d; 107a-107d) of which also in each case two (7a and 7c or 7b and 7d; 107a and 107c or 107b and 107d) are arranged on top of each other.

6. Linear guide according to claim 5, **characterised in that** the runner (2; 102) has two grooves (9a-9b; 109a-109b), in each case one between the glide strips (7a and 7c or 7b and 7d; 107a and 107c or 107b and 107d) arranged on top of each other.

7. Linear guide according to one of the claims 1 to 6, **characterised in that** the groove or the grooves (9a, 9b; 109a, 109b) start from the outside of the runner (2; 102) and terminate in front of the glide strips (7a and 7c or 7b and 7d; 107a and 107c or 107b and 107d).

8. Linear guide according to claim 7, **characterised in that** normal to the groove or the grooves (9a, 9b; 109a, 109b) there is in each case provided a threaded bore (11a, 11b; 111a, 111b), which also intersects this groove or these grooves, in which to both sides of the groove (9a, 9b; 109a, 109b) there are in each case provided one or more screws (12, 13).

## Revendications

1. Guidage linéaire avec un rail (1) ou une glissière, qui comporte au moins trois surfaces de guidage (3a-3d), et avec au moins un mobile (2), dans lequel entre chacune des surface de guidage (3a-3d) et le mobile (2), est prévue au moins une bande de glissement (7a-7d), qui présente une surface plane, dans lequel les bandes de glissement (7a-7d) sont disposées par leur surface plane sur les surfaces de guidage planes (3a-3d) et le mobile comporte au moins une rainure (9a-9d), la largeur de la rainure (9a-9b) étant réglable, **caractérisé en ce que** les bandes de glissement (7a-7d) présentent de façon supplémentaire également chaque fois une surface partiellement cylindrique, avec laquelle il s'appuie sur les rainures correspondantes (8a-8d) partiellement cylindrique de la face intérieure du mobile (2) et **en ce que** la rainure (9a-9b) est située dans un plan qu s'étend entre deux bandes de glissement (7a et 7c et/ou 7b et 7d) parallèlement aux bandes de glissement (7a à 7d).

2. Guidage linéaire avec un rail (101) ou une glissière, qui comporte au moins trois surfaces de guidage (103a-103d) et avec au moins un mobile (102), dans lequel entre chacune des surfaces de guidage (103a-103d) et le mobile (102) est prévue au moins une bande de glissement (107a-107d), qui présente une surface plane, dans lequel les bandes de glissement (107a-107d) sont disposés par leur surface plane sur les surfaces d'appui planes correspondantes (108a à 108d) de la face intérieure du mobile (102) et le mobile (102) comporte au moins une rainure (109a-109d) la largeur (109a, 109b) étant réglable, **caractérisé en ce que** les bandes de glissement (107a-107d) présentent de façon supplémentaire, également chacune une surface partiellement cylindrique, avec laquelle elle s'appuie sur les surfaces de guidage (103a-103d) qui sont réalisées comme des rainures partiellement cylindriques et **en ce que** la rainure (109a, 109b) est située dans un plan, qui s'étend entre deux bandes de glissement (107a et 107c) ou (107b et 107d) parallèlement aux bandes de glissement (107a-107d).

3. Guidage linéaire selon la revendication 1 ou 2, **caractérisé en ce que** les surfaces partiellement cylindriques sont semi-cylindriques.

4. Guidage linéaire selon l'une des revendications 1 à 3, **caractérisé en ce que** la largeur de la (des) rainure(s) est réglable par l'intermédiaire de vis (12,13).

5. Guidage linéaire selon l'une des revendications 1 à 4, **caractérisé en ce que** le rail (1;101) ou glissière comporte quatre surfaces de guidage (3a à 3d ; 103a à 103d), dont deux (3a et 3c ou 3b et 3d ; 103a et 103c ou 103b et 103d) dont deux sont situées l'une ou dessus de l'autre, et **en ce que** le mobile (2 ; 102) comporte quatre bandes de glissement (7a à 7d ; 107a à 107d), dont également deux (7a et 7c ou 7b et 7d ; 107a et 107c ou 107b et 107d) sont disposées l'une au-dessus de l'autre.

6. Guidage linéaire selon la revendication 5, **caractérisé en ce que** le mobile (2 ; 102) comporte deux rainures (9a à 9b ; 109a à 109b), chacune entre les bandes de glissement (7a et 7c ou 7b et 7d ; 107a et 107c ou 107b et 107d) situées l'une au-dessus de l'autre.

7. Guidage linéaire selon l'une des revendications 1 à 6, **caractérisé en ce que** la (ou les) rainule(s) (9a, 9b ; 109a, 109b) partent de la face extérieure du mobile (2; 102) et se terminent avant les bandes de glissement (7a et 7c ou 7b et 7d ; 107a et 107c ou 107b et 107d).

8. Guidage linéaire selon la revendication 7, **caractérisé en ce que** perpendiculairement à la (ou les) rainure(s) (9a, 9b ; 109a, 109b) et en coupant celles-ci, est prévu chaque fois un alésage fileté (11a, 116 ; 111a, 111b), dans lequel les deux côtés de la rainure (9a, 9b ; 109a, 109b) sont prévues chaque fois une ou plusieurs vis (12, 13).
